# FASCICULE DE BREVET EUROPEEN

(11) **EP 1 215 091 B1**
(45) Date de publication et mention de la délivrance du brevet: **15.02.2006**
(21) Numéro de dépôt: 01811224.3
(22) Date de dépôt: 13.12.2001
(51) Int. Cl.: B60R 21/02

(54) **Dispositif de blocage des jambes d'un passager dans un siège**
Vorrichtung zum Festhalten der Beine eines Insassen in einem Sitz
Device for immobilizing the legs of a passenger in a seat

(30) Priorité: 13.12.2000 CH 24272000
(43) Date de publication de la demande: 19.06.2002
(73) Titulaire: BOLLIGER & MABILLARD, INGENIEURS CONSEILS S.A., CH-1870 Monthey (CH)
(72) Inventeur: Berra, Eric, 1871 Choëx (CH)
(74) Mandataire: Ganguillet, Cyril

(56) Documents cités:
- EP-A- 1 020 212
- WO-A-99/22830
- FR-A- 2 076 427
- PATENT ABSTRACTS OF JAPAN vol. 1997, no. 02, 28 février 1997 (1997-02-28) & JP 08 257084 A (TEC CORP), 8 octobre 1996 (1996-10-08)

## Description

La présente invention concerne un dispositif de blocage des jambes d'un passager dans un siège, notamment un siège d'une installation pour parcs d'attractions.

On trouve dans les parcs d'attractions diverses installations où circulent des véhicules dans lesquels prennent place des passagers pour vivre une expérience originale et avoir des émotions et des sensations inhabituelles.

Ces installations offrent un éventail de sensations très large allant de la simple balade, quelquefois surprenante dans les trains fantômes, aux figures d'acrobatie aérienne que permettent les roller coasters.

Les dispositifs de retenue des passagers dans les sièges des véhicules circulant dans ces installations sont adaptés aux vitesses et aux accélérations auxquelles sont soumises les passagers. Ainsi, les roller coasters sont pourvus de dispositifs de retenue comportant des harnais qui constituent de véritables carcans qui encerclent le corps du passager de façon à éviter tout risque d'éjection du passager lors du parcours.

Dans une forme de réalisation particulière des roller coasters suspendus, les passagers effectuent le parcours le long du circuit, le dos disposé sensiblement parallèlement à la voie constituée par les rails. De telles installations sont notamment décrites dans les publications de demandes de brevet internationales WO 99/22829 et WO 99/22830. Du fait de la position qu'occupent les passagers dans ces installations, il est nécessaire que le passager soit non seulement maintenu au niveau du corps mais également de bloquer ses jambes.

A cet effet, les dispositifs proposés dans les demandes internationales antérieures mentionnées ci-dessus proposent un dispositif de blocage des jambes solidaire d'un élément monté en basculement sur la partie inférieure du support du siège. Entre autres inconvénients, un tel dispositif est encombrant car il nécessite un prolongement du support du siège vers le bas pour servir d'appui au basculement.

Le but de la présente invention est de proposer un dispositif de retenue des jambes du passager qui permette de remédier aux inconvénients des dispositifs connus, qui soit simple à réaliser, tout en permettant une grande sécurité à grand confort pour le passager.

A cet effet, l'invention concerne un dispositif de blocage des jambes d'un passager dans un siège, tel que défini à la revendication 1. Elle concerne également un siège comportant un dispositif de blocage des jambes du passager, tel que défini à la revendication 14.

La description qui suit, donnée à titre d'exemple, se réfère au dessin sur lequel :
- la figure 1 est une vue en perspective de trois quarts avant d'un exemple schématique de siège comportant un exemple de dispositif de blocage selon l'invention en position ouverte,
- la figure 2 est une vue en perspective de trois quarts avant du siège de la figure 1, le dispositif de blocage étant représenté en position fermée,
- la figure 3 est une vue latérale partiellement en coupe d'un siège comportant un dispositif de blocage selon l'invention en position ouverte et illustrant un exemple de réalisation du mécanisme d'ouverture/fermeture dudit dispositif,
- la figure 4 est une coupe partielle vue d'en haut du dispositif de blocage représenté à la figure 3,
- la figure 5 est une vue latérale semblable à celle de la figure 3, le dispositif de blocage étant représenté en position fermée,
- la figure 6 est une coupe partielle vue d'en haut du dispositif de blocage représenté à la figure 5,
- la figure 7 est une vue latérale partiellement en coupe d'un siège comportant un dispositif de blocage selon l'invention en position ouverte et illustrant une première variante de réalisation du mécanisme d'ouverture/fermeture dudit dispositif,
- la figure 8 est une coupe partielle vue d'en haut du dispositif de blocage représenté à la figure 7,
- la figure 9 est une vue latérale semblable à celle de la figure 7, le dispositif de blocage étant représenté en position fermée,
- la figure 10 est une coupe partielle vue d'en haut du dispositif de blocage représenté à la figure 9,
- la figure 11 est une vue latérale partiellement en coupe d'un siège comportant un dispositif de blocage selon l'invention en position ouverte et illustrant une seconde variante de réalisation du mécanisme d'ouverture/fermeture dudit dispositif,
- la figure 12 est une vue en coupe partielle vue d'en haut du dispositif de blocage représenté à la figure 11,
- la figure 13 est une vue de détail selon A du mécanisme de la figure 11, et
- les figures 14 à 16 sont des représentations analogues à celles des figures 11 à 13, mais dans lesquelles le dispositif de blocage est en position fermée.

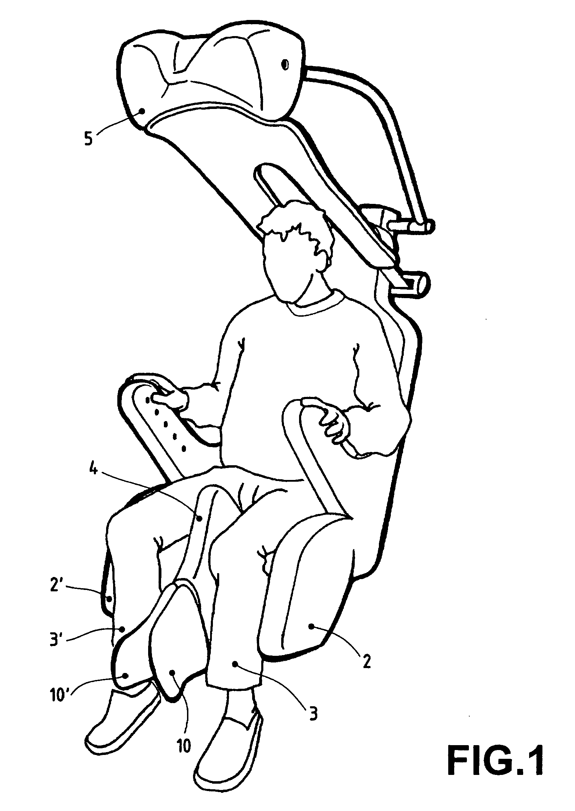

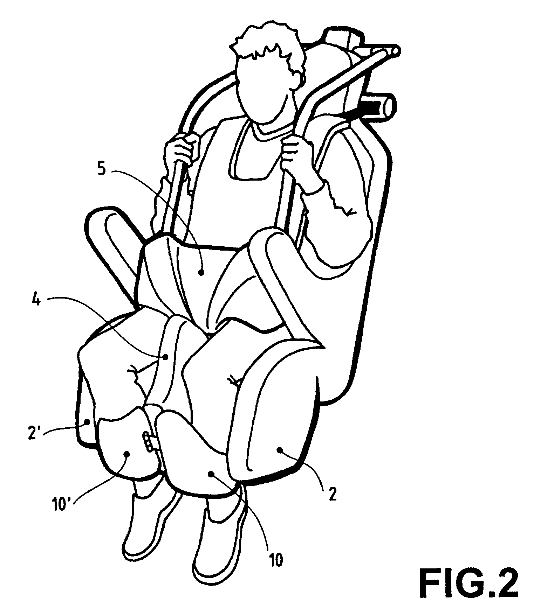

On a représenté aux figures 1 et 2 un siège comportant un dispositif de blocage des jambes d'un passager selon l'invention. Le siège comprend un placet constituant la partie d'assise proprement dite du siège et comportant un renflement central 4 en forme de bosse de chameau, agencé pour coopérer avec le coussin 5 d'un harnais, et des parties latérales 2, 2' s'étendant en dessous du siège et servant au maintien latéral des jambes 3, 3' du passager. Le blocage des jambes 3, 3' est réalisé au moyen de deux volets 10, 10', montés en articulation à l'extrémité du support du placet du siège. Lorsqu'ils sont en position fermée, ces volets coopèrent avec le placet du siège et en particulier avec ses parties latérales 2, 2' de façon à encercler les jambes 3, 3' du passager assis dans le siège.

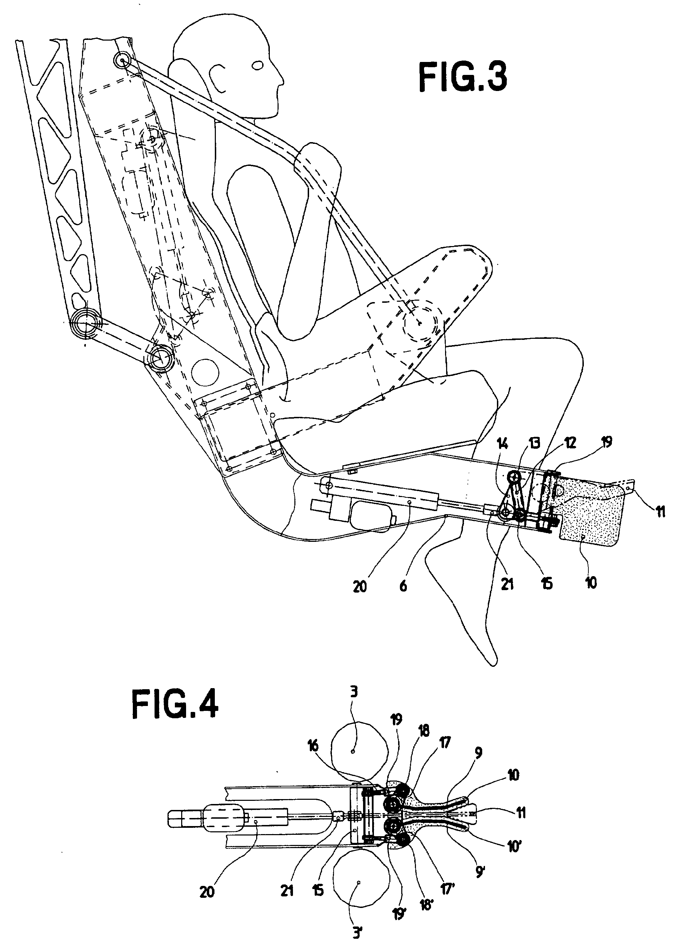

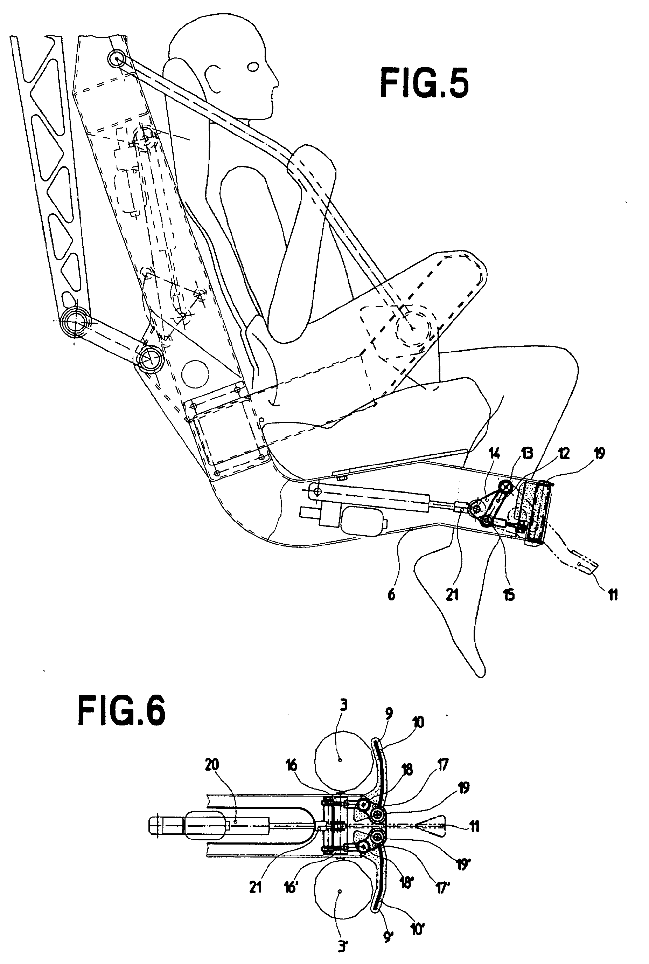

Un premier exemple de réalisation du mécanisme d'ouverture/fermeture du dispositif est représenté sur les figures 3 à 6. Ce mécanisme peut être monté par exemple à l'intérieur d'une poutre disposée dans le prolongement du support du placet du siège, à sa partie médiane de façon à faire saillie entre les jambes du passager. Ce mécanisme comprend une pédale 11 solidaire d'un levier 12 monté en articulation autour d'un axe horizontal 13 solidaire du support 6 du placet 7 du siège. L'extrémité inférieure du levier 12 est solidaire d'un axe horizontal 15 qui peut coulisser à l'intérieur du support 6 du placet du siège de façon à actionner le mouvement de fermeture/ouverture des volets 10, 10'. Le levier 12 comporte une oreille 14 en saillie vers l'arrière et montée en articulation à l'extrémité 21 d'un vérin hydraulique 20 de verrouillage du dispositif.

Chacune des extrémités de la barre 15 est reliée par l'intermédiaire d'une bielle 16, 16' à l'une des extrémités 18, 18' d'un levier 17, 17' solidaire de l'armature 9, 9' d'un des volets 10, 10' et dont l'autre extrémité pivote autour d'un axe 19, 19' monté à l'extrémité du support 6 du placet du siège. Comme représentés sur les dessins, les volets 10, 10' peuvent être constitués par une armature 9, 9' recouverte de mousse de polyuréthane. Lorsque, comme représenté aux figures 3 et 4, les volets sont en position ouverte, l'actionnement vers le bas de la pédale 11 entraîne le déplacement de l'axe 15 vers l'arrière (vers la gauche sur le dessin), l'axe 15 entraînant à son tour le déplacement des bielles 16, 16', qui à leur tour provoquent la rotation des leviers 17, 17' autour de leurs axes 19, 19', ce qui a pour conséquence la fermeture des volets 10, 10'. Dans le même temps, le pivotement du levier 12 vers l'arrière agit sur l'extrémité 21 du vérin 20 pour le mettre en compression.

Le vérin hydraulique de verrouillage 20 peut être par exemple un vérin à vanne électromagnétique qui bloque les fluides du vérin lorsque la pédale 11 est en position basse, les volets étant fermés. A ce moment, le vérin est en compression. Son déblocage ultérieur, par basculement de sa vanne, actionnera un mouvement en sens inverse du dispositif provoquant l'ouverture des volets.

Dans les deux variantes d'exécution que l'on va maintenant décrire, le mouvement de fermeture des volets est commandé automatiquement par le mouvement de fermeture du harnais. Pour le reste, le fonctionnement du dispositif de blocage est semblable à celui représenté aux figures 1 à 6, les éléments identiques étant désignés par les mêmes chiffres de référence.

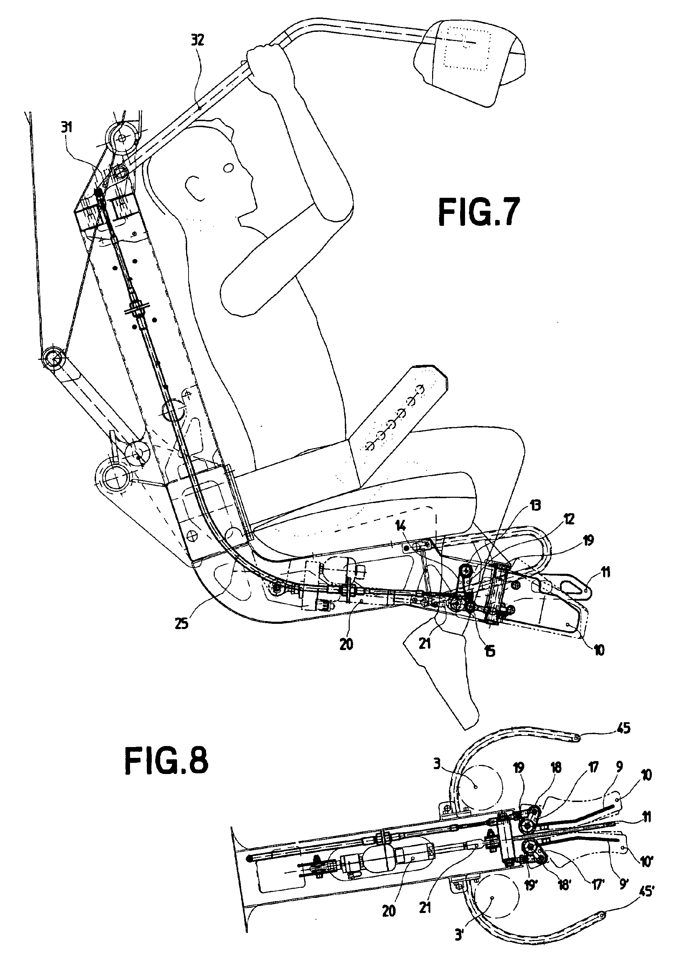

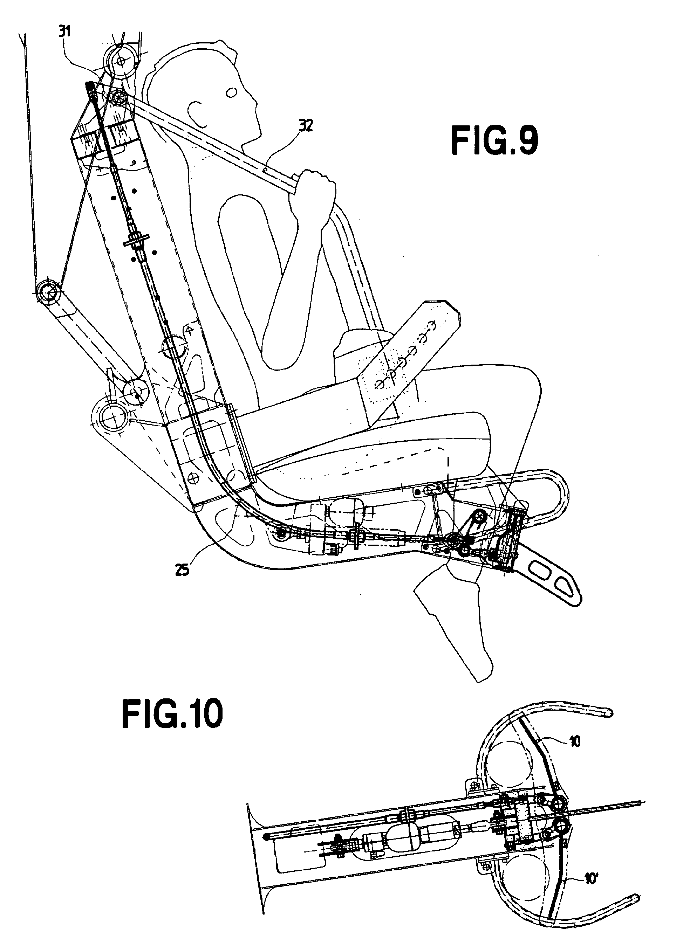

Selon une première variante d'exécution représentée aux figures 7 à 10, l'actionnement du levier 12 pour la fermeture/ouverture des volets 10, 10' est réalisé non pas au moyen de la pédale 11 mais par l'intermédiaire d'un câble 25 fixé par exemple à l'une de ses extrémités à l'extrémité de l'oreille 14 solidaire du levier 12, et à son autre extrémité à un levier 31 solidaire du harnais 32, de façon à exercer une traction sur l'oreille 14 du levier 12 lors du mouvement de fermeture du harnais ou une poussée sur cette oreille lors de l'ouverture du harnais. Le câble 25 est disposé à l'intérieur d'une gaine flexible. On peut utiliser par exemple un câble du type "push-pull" (pousser-tirer) que l'on trouve dans le commerce. Dans cette variante, le prolongement des parties latérales 2, 2' du siège des figures 1 et 2 est remplacé par des arceaux extérieurs d'emprisonnement des jambes 45.

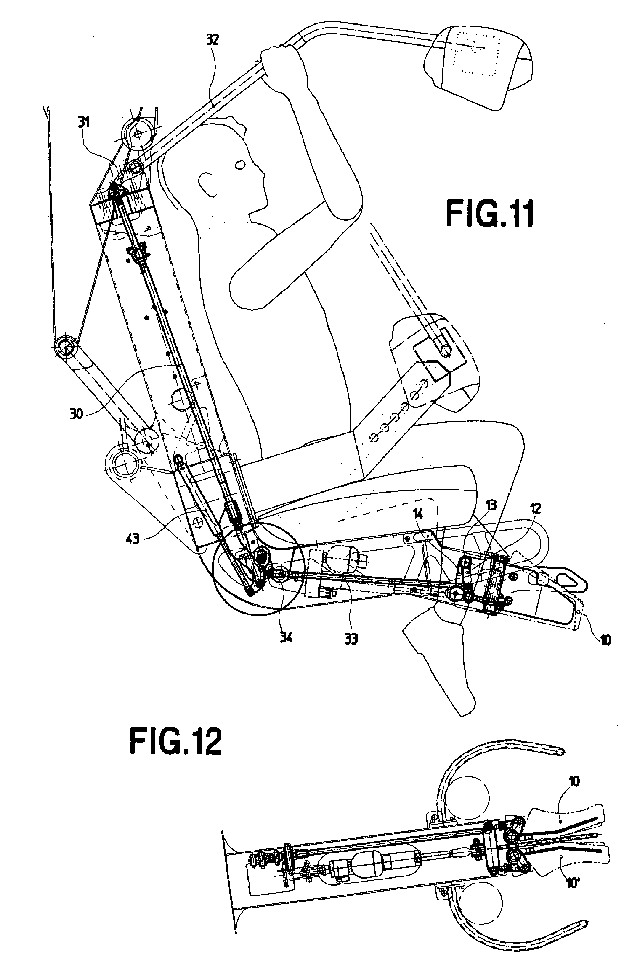

Selon une seconde variante d'exécution représentée aux figures 11 à 16, l'ensemble est agencé de façon que la fermeture des volets 10, 10' s'effectue automatiquement sous la commande de mouvement de fermeture du harnais. En revanche, l'ouverture des volets et l'ouverture du harnais sont commandées séparément. A cet effet, le dispositif comporte un mécanisme de solidarisation temporaire des volets avec le harnais.

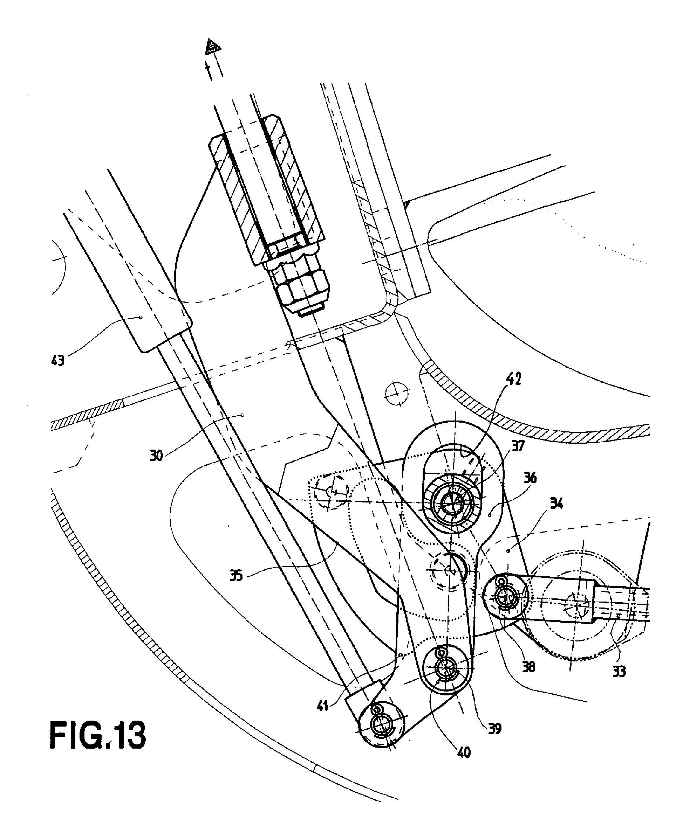

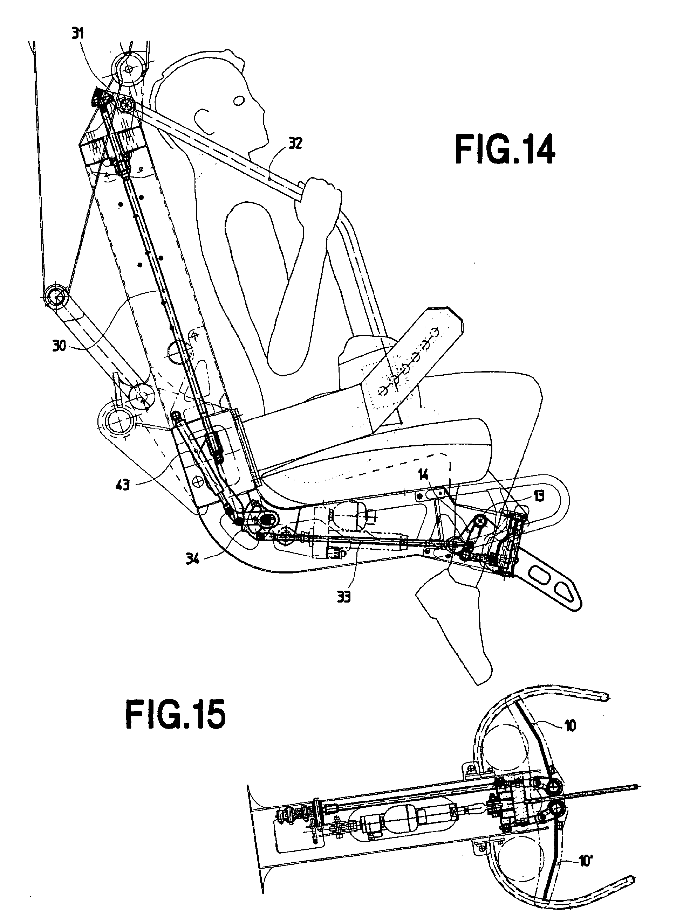

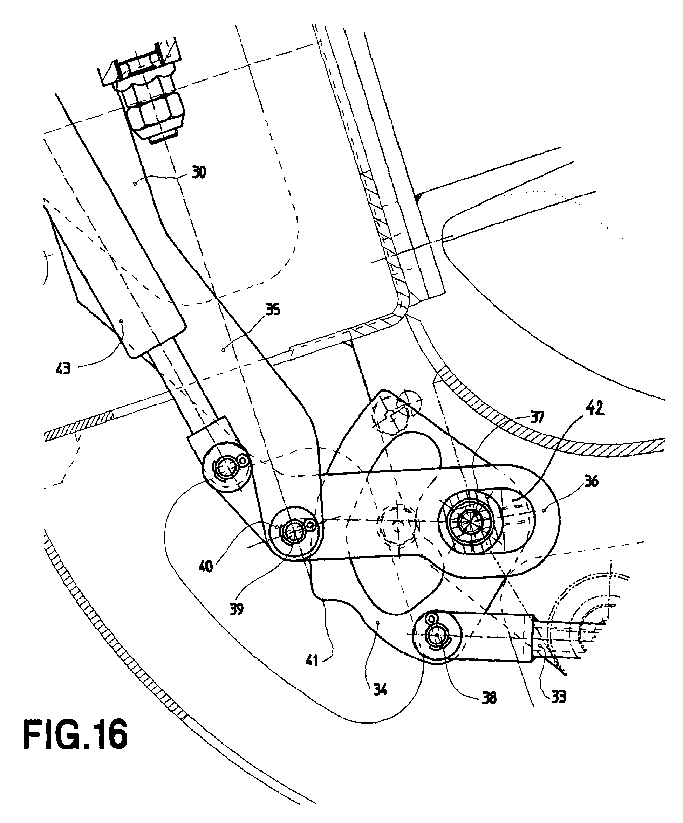

Comme représenté aux figures 11 et 14, le dispositif comprend un système de commande comportant une tringle de liaison 30 fixée en articulation à l'une de ses extrémités à un levier 31 solidaire du harnais 32 et une barre de commande 33, fixée en articulation à l'une de ses extrémités à l'extrémité de l'oreille 14 solidaire du levier 12 permettant d'actionner le mouvement de fermeture/ouverture des volets 10, 10'. Les autres extrémités respectives de la tringle de liaison 30 et de la barre de commande 33 sont agencées pour coopérer avec une came intermédiaire 34 agencée de façon à permettre la solidarisation temporaire des volets 10, 10' avec le harnais 32, comme représenté à plus grande échelle sur les figures de détail 13 et 16, le mécanisme étant représenté dans une position correspondant à la position ouverte des volets à la figure 13 et dans une position correspondant à la position fermée des volets à la figure 16.

On va décrire maintenant, de façon plus détaillée, le mécanisme de solidarisation temporaire des volets avec le harnais. Comme on le voit sur les figures 13 et 16, l'extrémité inférieure de la tringle de liaison 30 comporte une partie 35 en forme de fourche entre les deux branches de laquelle sont disposées la came intermédiaire 34 et une bielle d'actionnement 36. La bielle 36 est montée, à l'une de ses extrémités, en articulation autour d'un axe 37 solidaire de la came 34, et à proximité de son autre extrémité à l'extrémité inférieure de la partie 35 de la tringle 30 par l'intermédiaire d'un axe 39. A cette même extrémité, la bielle 36 est en outre montée en articulation à l'extrémité d'un ressort d'équilibrage 43 servant à, contrebalancer le poids propre du harnais lorsqu'il est en position d'ouverture. La came 34 est à son tour montée en articulation autour d'un axe 38 solidaire de l'extrémité de la barre de commande 33. Un galet 40 est monté autour de l'axe 39 entre les branches de la fourche 36 de façon à coopérer avec une partie 41 en forme de nez de la came intermédiaire 34. Le mécanisme est agencé de façon que lorsque le passager abaisse le harnais, la tringle de liaison 30 effectue une traction vers le haut selon le sens de la flèche t représentée à la figure 13, ce qui entraîne un pivotement de la bielle 36 vers le haut, le galet 40 venant alors s'appuyer contre la partie en forme de nez 41 de la came intermédiaire 34 et provoquant de ce fait le basculement de la came intermédiaire 34 dans le sens des aiguilles d'une montre, ce qui provoque un déplacement vers la gauche de la barre de commande 33 qui entraîne la fermeture des volets 10, 10'. Le percement 42 de la bielle 36 à l'endroit de son pivotement autour de l'axe 37 est ovalisé de façon à permettre au galet 40 de contourner la partie 41 en forme de nez de la came 34 une fois que les volets 10, 10' sont fermés, comme on le voit à la figure 16, ce qui désolidarise alors le mouvement du harnais de celui des volets.

Le système est ainsi agencé de façon que, lorsque le harnais a effectué les deux tiers de sa course vers le bas, les volets sont déjà complètement fermés et détectés comme tels. A ce moment précis, les volets sont verrouillés dans leur position fermée, alors que, avant d'atteindre ce point, le passager a tout loisir d'ouvrir à nouveau volets et harnais en agissant simplement sur le harnais s'il souhaite rajuster sa position dans le siège. Lorsque le harnais a effectué les deux tiers de sa course et que les volets sont verrouillés dans leur position fermée, le passager continue le mouvement de fermeture du harnais, alors désolidarisé du mouvement des volets comme on l'a décrit ci-dessus, jusqu'à atteindre un point de la zone de verrouillage dudit harnais correspondant à sa morphologie. Le passager est alors prêt au départ. Si l'opérateur s'aperçoit, lors de son contrôle, que les jambes du passager ne sont pas correctement placées dans les logements fermés par les volets, ou que le harnais est mal ajusté, il peut rouvrir, puis refermer, indépendamment l'un de l'autre, le harnais ou les volets sans perdre les bonnes positions déjà acquises, l'ouverture du harnais ou des volets s'effectuant alors électriquement. Dans l'hypothèse où l'opérateur ne rouvre que les volets, leur fermeture s'effectuera alors avec la pédale 11.

Lors du retour du train à la gare, l'ouverture des volets et l'ouverture du harnais sont commandées séparément par des moyens en soi connus inutiles de décrire ici. Lorsque le harnais atteint à nouveau sa position d'ouverture maximale, la came intermédiaire 34 de solidarisation temporaire se réarme automatiquement sous l'effet du ressort d'équilibrage 43 et grâce à sa géométrie. Le siège est alors prêt à accueillir un nouveau passager.

Bien entendu, le mouvement d'ouverture/fermeture des volets peut également être obtenu au moyen de tous autres moyens adéquats, comme par exemple à l'aide de moteurs électriques pouvant par exemple être commandés électroniquement et synchronisés lors du mouvement d'ouverture/fermeture du harnais.

## Revendications

1. Dispositif de blocage des jambes d'un passager dans un siège, notamment un siège d'une installation pour parcs d'attractions, **caractérisé en ce qu'**il comporte deux volets (10, 10') montés en articulation à l'extrémité du support (6) du placet (7) du siège.

2. Dispositif selon la revendication 1, **caractérisé en ce qu'**il comprend un mécanisme d'actionnement du mouvement des volets comportant des organes agissant sur des leviers (17, 17') solidaires des volets.

3. Dispositif selon la revendication 2, **caractérisé en ce que** le mécanisme d'actionnement du mouvement des volets comprend un levier d'actionnement (12) monté en pivotement sur le support (6) du placet du siège et solidaire d'un axe (15) dont chacune des extrémités est reliée à l'extrémité d'un des dits leviers (17, 17') solidaires des volets.

4. Dispositif selon la revendication 3, **caractérisé en ce que** le mécanisme d'actionnnement du mouvement des volets est commandé par une pédale (11) solidaire du dit levier d'actionnement (12) et agencée pour commander le mouvement du dit levier d'actionnement.

5. Dispositif selon l'une des revendications 2 à 4, **caractérisé en ce qu'**il comporte des moyens de commande pour asservir de façon au moins temporaire le mécanisme d'actionnement du mouvement des volets à un dispositif de retenue (32) du haut du corps du passager dans le siège, de façon à obtenir la fermeture automatique des volets lors de la fermeture dudit dispositif de retenue du haut du corps du passager dans le siège.

6. Dispositif selon la revendication 5, **caractérisé en ce que** le mécanisme d'actionnement du mouvement des volets est commandé au moyen d'un câble solidaire d'un levier d'actionnement (12) de mouvement des volets et relié à un levier (31) solidaire du dispositif de retenue du haut du corps du passager dans le siège.

7. Dispositif selon la revendication 5, **caractérisé en ce que** lesdits moyens de commande comportent une came intermédiaire (34) conformée et agencée de façon à permettre la solidarisation temporaire du mécanisme d'actionnement du mouvement des volets au mouvement du dispositif de retenue du haut du corps du passager lors du mouvement de fermeture de ce dernier.

8. Dispositif selon la revendication 7, **caractérisé en ce** lesdits moyens de commande comportent un premier organe de liaison (30) articulé à l'une de ses extrémités à un levier (31) solidaire du dispositif de retenue du haut du corps du passager (32) et articulé à son autre extrémité à l'une des extrémités d'une bielle (36) montée en articulation à son autre extrémité sur la came (34), et un second organe de liaison (33) articulé à l'une de ses extrémités sur le mécanisme d'actionnement du mouvement des volets et articulé à son autre extrémité sur la came (34).

9. Dispositif selon la revendication 8, **caractérisé en ce qu'**il comporte en outre un galet (40) monté sur l'axe d'articulation dudit premier organe de liaison (30) sur ladite bielle (36), agencé de façon à coopérer avec une partie en forme de nez (41) de la came (34), de façon à provoquer le pivotement de ladite came.

10. Dispositif selon la revendication 9, **caractérisé en ce que** ladite bielle (36) comporte, à l'endroit de son articulation sur la came (34), un percement (42), de façon à constituer un jeu à ladite articulation permettant au galet (40) de contourner la partie en forme de nez (41) de la came (34) une fois que les volets (10, 10') sont fermés.

11. Dispositif selon la revendication 3, **caractérisé en ce que** le mécanisme d'actionnement du mouvement des volets est actionné par au moins un moteur électrique.

12. Dispositif selon la revendication 11, **caractérisé en ce que** ledit moteur électrique est commandé électroniquement lors du mouvement d'ouverture/fermeture d'un dispositif de retenue du passager dans le siège.

13. Dispositif selon l'une des revendications 3 à 12, **caractérisé en ce qu'**il comporte un vérin hydraulique (21) pour le verrouillage des volets en position fermée, le dit vérin étant rendu solidaire du levier d'actionnement (12), de sorte que le pivotement du dit levier (12) entraîne l'actionnement du vérin.

14. Siège pour le transport d'un passager, notamment dans des installations pour parcs d'attractions, **caractérisé en ce qu'**il comporte un dispositif de blocage des jambes du passager selon l'une des revendications précédentes.

15. Siège selon la revendication 14, **caractérisé en ce qu'**il comporte des parties latérales en saillie en dessous du placet et servant au maintien latéral des jambes du passager, lesdites parties latérales étant agencées pour coopérer avec les volets pour le blocage des jambes du passager.

## Patentansprüche

1. Vorrichtung zum Festhalten der Beine eines Fahrgasts in einem Sitz, insbesondere einem Sitz einer Anlage für Vergnügungsparks, **dadurch gekennzeichnet, daß** sie zwei Klappen (10, 10') aufweist, die schwenkbar am Ende des Trägers (6) der Sitzfläche (7) des Sitzes montiert sind.

2. Vorrichtung nach Anspruch 1, **dadurch gekennzeichnet, daß** sie einen Mechanismus zum Antrieb der Bewegung der Klappen umfaßt, welcher Organe aufweist, die auf Hebel (17, 17') einwirken, die fest mit den Klappen verbunden sind.

3. Vorrichtung nach Anspruch 2, **dadurch gekennzeichnet, daß** der Mechanismus zum Antrieb der Bewegung der Klappen einen Betätigungshebel (12) umfaßt, der schwenkbar an dem Träger (6) der Sitzfläche des Sitzes montiert ist und fest mit einer Achse (15) verbunden ist, deren jedes Ende mit dem Ende eines der mit den Klappen fest verbundenen Hebel (17, 17') verbunden ist.

4. Vorrichtung nach Anspruch 3, **dadurch gekennzeichnet, daß** der Mechanismus zum Antrieb der Bewegung der Klappen durch ein Pedal (11) betätigt wird, das fest mit dem Betätigungshebel (12) verbunden und dafür vorgesehen ist, die Bewegung des Betätigungshebels anzutreiben.

5. Vorrichtung nach einem der Ansprüche 2 bis 4, **dadurch gekennzeichnet, daß** sie Steuermittel aufweist, um wenigstens vorübergehend den Mechanismus zum Antrieb der Bewegung der Klappen von einer Vorrichtung zum Halten (32) des Oberkörpers des Fahrgasts in dem Sitz abhängig zu machen, so daß beim Schließen dieser Vorrichtung zum Halten des Oberkörpers des Fahrgasts in dem Sitz die automatische Schließung der Klappen erreicht wird.

6. Vorrichtung nach Anspruch 5, **dadurch gekennzeichnet, daß** der Mechanismus zum Antrieb der Bewegung der Klappen mittels eines Kabels betätigt wird, das fest mit einem Betätigungshebel (12) für die Bewegung der Klappen verbunden ist und mit einem Hebel (31) verbunden ist, der mit der Vorrichtung zum Halten des Oberkörpers des Fahrgasts in dem Sitz einstückig ist.

7. Vorrichtung nach Anspruch 5, **dadurch gekennzeichnet, daß** die Steuermittel eine Zwischennocke (34) aufweisen, die so geformt und angeordnet ist, daß sie die vorübergehende Verbindung des Mechanismus zum Antrieb der Bewegung der Klappen mit der Bewegung der Vorrichtung zum Halten des Oberkörpers des Fahrgasts in dem Sitz bei der Schließbewegung dieser letzteren ermöglicht.

8. Vorrichtung nach Anspruch 7, **dadurch gekennzeichnet, daß** die Steuermittel ein erstes Verbindungsorgan (30), das mit einem seiner Enden an einem Hebel (31) angelenkt ist, der mit der Vorrichtung zum Halten des Oberkörpers des Fahrgasts (32) einstückig ist, und mit seinem anderen Ende an einem der Enden eines Glieds (36) angelenkt ist, das mit seinem anderen Ende schwenkbar an der Nocke (34) montiert ist, und ein zweites Verbindungsorgan (33) aufweisen, das mit einem seiner Enden an dem Mechanismus zum Antrieb der Bewegung der Klappen angelenkt ist und mit seinem anderen Ende an der Nocke (34) angelenkt ist.

9. Vorrichtung nach Anspruch 8, **dadurch gekennzeichnet, daß** sie außerdem eine Rolle (40) aufweist, die auf der Schwenkachse des ersten Verbindungsorgans (30) an dem Glied (36) montiert und so angeordnet ist, daß sie mit einem nasenförmigen Teil (41) der Nocke (34) zusammenwirkt, um das Schwenken dieser Nocke zu bewirken.

10. Vorrichtung nach Anspruch 9, **dadurch gekennzeichnet, daß** das Glied (36) am Ort seiner Anlenkung an der Nocke (34) eine Durchbohrung (42) aufweist, so daß ein Gelenkspiel gebildet wird, das es der Rolle (40) ermöglicht, den nasenförmigen Teil (41) der Nocke (34) zu umrunden, sobald die Klappen (10, 10') geschlossen sind.

11. Vorrichtung nach Anspruch 3, **dadurch gekennzeichnet, daß** der Mechanismus zum Antrieb der Bewegung der Klappen mittels eines Elektromotors betätigt wird.

12. Vorrichtung nach Anspruch 11, **dadurch gekennzeichnet, daß** der Elektromotor bei der Öffnungs-/Schließbewegung einer Vorrichtung zum Halten des Fahrgasts in dem Sitz elektronisch gesteuert wird.

13. Vorrichtung nach einem der Ansprüche 3 bis 12, **dadurch gekennzeichnet, daß** sie einen Hydraulikzylinder (21) zur Verriegelung der Klappen in der geschlossenen Stellung aufweist, wobei dieser Zylinder derart mit dem Betätigungshebel (12) verbunden ist, daß das Schwenken dieses Hebels (12) die Betätigung des Zylinders bewirkt.

14. Sitz für den Transport eines Fahrgasts, insbesondere in Anlagen für Vergnügungsparks, **dadurch gekennzeichnet, daß** er eine Vorrichtung zum Festhalten der Beine des Fahrgasts nach einem der vorhergehenden Ansprüche aufweist.

15. Sitz nach Anspruch 14, **dadurch gekennzeichnet, daß** er Seitenteile aufweist, die unter der Sitzfläche vorspringen und zur seitlichen Abstützung der Beine des Fahrgasts dienen, wobei diese Seitenteile dafür vorgesehen sind, zum Festhalten der Beine des Fahrgasts mit den Klappen zusammenzuwirken.

## Claims

1. A device for locking the legs of a passenger in a seat, in particular a seat on an installation for amusement parks, **characterized in that** it comprises two flaps (10, 10') mounted for articulation at the end of the support (6) of the base (7) of the seat.

2. A device according to claim 1, **characterized in that** it comprises a mechanism for actuating the movement of the flaps having members acting on levers (17, 17') fixed to the flaps.

3. A device according to claim 2, **characterized in that** the mechanism for actuating the movement of the flaps comprises an actuation lever (12) mounted for pivoting on the support (6) of the base of the seat and fixed to a shaft (15), each ends of which are connected to the end of one of the said levers (17, 17') fixed to the flaps.

4. A device according to claim 3, **characterized in that** the mechanism for actuating the movement of the flaps is controlled by a pedal (11) fixed to the said actuation lever (12) and arranged to control the movement of the said actuation lever.

5. A device according to one of claims 2 to 4, **characterized in that** it has control means for at least temporarily slaving the mechanism for actuating the movement of the flaps to a device (32) for holding the top of the body of the passenger in the seat, so as to obtain the automatic closure of the flaps when closing the device for holding the top of the body of the passenger in the seat.

6. A device according to claim 5, **characterized in that** the mechanism for actuating the movement of the flaps is controlled by means of a cable fixed to a lever (12) actuating the movement of the flaps and connected to a lever (31) fixed to the device for holding the top of the body of the passenger in the seat.

7. A device according to claim 5, **characterized in that** the said control means include an intermediate cam (34) formed and arranged so as to allow the temporary connection of the mechanism actuating the movement of the flaps to the movement of the device holding the top of the body of the passenger during the closure movement of the latter device.

8. A device according to claim 7, **characterized in that** the said control means include a first connection member (30) articulated at one of its ends on a lever (31) fixed to a device for holding the top of the body of the passenger (32) and articulated at its other end on one of the ends of a link (36) mounted for articulation at its other end on the cam (34), and a second connecting member (33) articulated at one of its ends on the mechanism for actuating the movement of the flaps and articulated at its other end on the cam (34).

9. A device according to claim 8, **characterized in that** it also has a roller (40) mounted on the shaft for articulating the said first connecting member (30) on the said link (36), arranged so as to cooperate with a nose-shaped part (41) of the cam (34), so as to cause the pivoting of the said cam.

10. A device according to claim 9, **characterized in that** the said link (36) has, at the point of its articulation on the cam (34), a piercing (42), so as to constitute a clearance on the said articulation enabling said roller (40) to pass round the nose-shaped part (41) of the cam (34) once the flaps (10, 10') are closed.

11. A device according to claim 3, **characterized in that** the mechanism for actuating the movement of the flaps is actuated by at least one electric motor.

12. A device according to claim 11, **characterized in that** the said electric motor is controlled electronically during the opening/closing movement of a device for holding the passenger in the seat.

13. A device according to one of claims 3 to 12, **characterized in that** it has a hydraulic jack (21) for locking the flaps in the closed position, the said jack being made integral with the actuating lever (12), so that the pivoting of the said lever (12) causes the actuation of the jack.

14. A seat for the transportation of passengers, in particular in installations for amusement parks, **characterized in that** it has a device for holding the legs of the passenger according to one of the preceding claims.

15. A seat according to claim 14, **characterized in that** it has lateral parts projecting below the base and serving for the lateral holding of the legs of the passenger, the said lateral parts being arranged to cooperate with the flaps for locking the legs of the passenger.
